# EUROPÄISCHE PATENTSCHRIFT

(11) **EP 2 740 579 B1**
(45) Veröffentlichungstag und Bekanntmachung des Hinweises auf die Patenterteilung: **17.01.2018**
(21) Anmeldenummer: 13189684.7
(22) Anmeldetag: 22.10.2013
(51) Int. Cl.: B29C 45/14, B29L 31/30, B29C 45/40, B60R 13/02

(54) **Verfahren zur Herstellung eines Kunststoffbauteils**
Method for manufacturing a plastic component
Procédé destiné à la fabrication d'un composant en matière synthétique

(30) Priorität: 08.12.2012 DE 102012024056
(43) Veröffentlichungstag der Anmeldung: 11.06.2014
(73) Patentinhaber: Volkswagen Aktiengesellschaft, 38440 Wolfsburg (DE)
(72) Erfinder: Schubert, Jörg, 38159 Vechelde (DE); Hagemann, Michael, 38162 Cremlingen (DE)

(56) Entgegenhaltungen:
- EP-A1- 0 546 234
- DE-B3-102004 041 868
- FR-A1- 2 735 063
- JP-A- S62 227 613

## Beschreibung

Die Erfindung betrifft ein Verfahren zur Herstellung eines Kunststoffbauteils, insbesondere eines Verkleidungsteils und/oder eines Dekorteils eines Kraftfahrzeugs, bestehend aus einem Kunststoffkörper und einer mit dem Kunststoffkörper verbundenen und die Sichtfläche des Kunststoffbauteils bildenden Dekorbeschichtung, mit folgenden Verfahrensschritten:
i) Ein aus einer Trägerschicht und einer Dekorschicht bestehender Folienabschnitt wird als Bestandteil einer Folienbahn derart zwischen zwei geöffneten Werkzeughälften eines Spritzgießwerkzeugs angeordnet, dass die Dekorschicht des Folienabschnitts einer eine Negativform der Sichtfläche des Kunststoffbauteils abbildenden Werkzeugoberfläche abgewandt ist;
ii) erhitzte plastifizierte Kunststoffmasse wird unter Druck derart in eine sich beim Schließen der beiden Werkzeughälften zwischen diesen Werkzeughälften ausbildende Kavität eingespritzt, dass die plastifizierte Kunststoffmasse den Folienabschnitt unter Kontakt mit der Dekorschicht gegen die die Negativform der Sichtfläche des Kunststoffbauteils abbildende Werkzeugoberfläche der Kavität drückt, wobei die Trägerschicht des Folienabschnitts nach Abschluss des Einspritzens der Kunststoffmasse bei einer mit der Kunststoffmasse gefüllten Kavität vollflächig an der die Negativform der Sichtfläche des Kunststoffbauteils abbildenden Werkzeugoberfläche der Kavität anliegt;
iii) beim Abkühlen der eingespritzten Kunststoffmasse bildet sich aus dieser der Kunststoffkörper aus und verbindet sich unter Bildung des Kunststoffbauteils stoffschlüssig mit der Dekorschicht des Folienabschnitts;
iv) beim oder nach dem Öffnen der Werkzeughälften wird die Trägerschicht von der stoffschlüssig mit dem Kunststoffkörper verbundenen und die Sichtoberfläche des Kunststoffbauteils bildenden Dekorschicht abgezogen.

Aus der DE 10 2007 024 529 A1 ist ein Spritzpressverfahren zur Herstellung von Formteilen, insbesondere von Dekorteilen und Verkleidungsteilen für den Fahrzeuginnenraum bekannt. Die Formteile bestehen aus einem Träger aus Kunststoff, einer die Sichtfläche des Formteils bildenden Dekorschicht und einer Einlage aus duktilem Material. Zur Herstellung des Formteils werden ein die Dekorschicht bildender Werkstoff und ein die Einlage bildendes Material in eine geöffnete Kavität eines aus zwei Werkzeughälften bestehenden Spritzgießwerkzeugs eingelegt und positioniert. Nach dem Schließen der beiden Werkzeughälften wird eine den Träger ausbildende Kunststoffmasse durch eine Durchbrechung in der Einlage hindurch in die Kavität eingespritzt. Nach dem Erstarren und Aushärten bildet die Kunststoffmasse zusammen mit dem Material der Dekorschicht und der Einlage das Formteil aus, welches aus dem Spritzgießwerkzeug entnommen werden kann.

Die DE 42 38 131 A1 beschreibt ein Verfahren zum Anspritzen eines eine Sichtfläche bildenden Kunststoffüberzugs an eine Oberfläche eines Kunststoffgegenstands, insbesondere eines Gehäusekörpers einer Fahrzeugleuchte. Das Anspritzen des Kunststoffüberzugs an die Oberfläche des Kunststoffgegenstands erfolgt durch Spritzgießen derart, dass an der beim späteren bestimmungsgemäßen Gebrauch des Gegenstands im Sichtbereich eines Betrachters liegenden Oberfläche keine Anspritzmale auf dem Kunststoffüberzug sichtbar sind. Zum Ausführen der Anspritzung ist der Gegenstand in eine Form eines Spritzgießwerkzeugs eingelegt, wobei der betreffende Einspritzkanal des Spritzgießwerkzeugs von der der anzuspritzenden Oberfläche gegenüberliegenden Seite an eine Durchspritzöffnung in der Wand des Gegenstands herangeführt ist und der Kunststoff durch diese Durchspritzöffnung hindurch angespritzt wird.

Ein Verfahren zur Herstellung von als Verkleidungs- oder Dekorteilen ausgebildeten Kunststoffbauteilen der eingangs genannten Art ist in der Praxis als In-Mold-Decoration (IMD) bekannt. Beim IMD-Verfahren wird eine beispielsweise auf einer Rolle aufgewickelte, als Heißprägefolie ausgebildete Folienbahn von oben nach unten durch ein Spritzgießwerkzeug geführt. Die Heißprägefolie besteht dabei aus einer Polyester-Trägerfolie und einer als Lackschicht ausgebildeten Dekorschicht. Das Spritzgießwerkzeug weist zwei relativ zueinander verfahrbare Werkzeughälften auf, welche ein sogenanntes IMD-Werkzeug bilden. Beim Schließen der Werkzeughälften wird ein Folienabschnitt der Folienbahn zwischen den Werkzeughälften eingeklemmt. Beim anschließenden Einspritzen des plastifizierten Kunststoffs bzw. der Kunststoffschmelze wird der Folienabschnitt durch den Druck der Schmelze an die Wand der Kavität gepresst und die Lackschicht der Heißprägefolie verbindet sich durch die hohe Temperatur der Schmelze mit dem Kunststoff. Nach dem Abkühlen löst sich die Lackschicht von der Polyester-Trägerfolie. Das fertig dekorierte Bauteil kann dem Spritzgießwerkzeug bzw. dem IMD-Werkzeug anschließend entnommen werden. Die Trägerfolie wird unter der Schließeinheit auf einer zweiten Rolle aufgewickelt und ein neuer Folienabschnitt wird automatisch vor der Kavität positioniert.

Beim IMD-Verfahren werden also die eigentliche Bauteilfertigung und der Dekorationsprozess der Bauteile in einem Arbeitsgang zusammengefasst. Dabei ist es möglich, die Bauteile mit unterschiedlichen Dekoren zu versehen, beispielweise mit einer Lackierung oder einer Holz- bzw. Aluminiumoptik. Ein Dekorwechsel wird anhand eines Rollenwechsels vorgenommen.

Vor diesem Hintergrund liegt der Erfindung die Aufgabe zugrunde, ein verbessertes Verfahren zur Herstellung eines Kunststoffbauteils bestehend aus einem Kunststoffkörper und einer mit dem Kunststoffkörper verbundenen und die Sichtfläche des Kunststoffbauteils bildenden Dekorbeschichtung zur Verfügung zu stellen.

Die Aufgabe wird gelöst mit einem Verfahren gemäß den Merkmalen des Patentanspruchs 1. Die Unteransprüche 2 bis 4 betreffen besonders zweckmäßige Weiterbildungen der Erfindung.

Erfindungsgemäß ist also ein Verfahren zur Herstellung eines Kunststoffbauteils vorgesehen, bei welchem die plastifizierte Kunststoffmasse von einer der Dekorschicht abgewandten Seite durch eine Durchbrechung in dem Folienabschnitt hindurch in die zwischen den beiden Werkzeughälften des Spritzgießwerkzeugs angeordnete Kavität eingespritzt wird. Hierdurch kann die die Kunststoffmasse in die zwischen den beiden geschlossenen Werkzeughälften angeordnet Kavitäte einspritzende Einspritzdüse, die sogenannte Heißkanaldüse, nahe der Kontur des herzustellenden Kunststoffbauteils innerhalb der Folienbahn angeordnet werden. Hierdurch ergibt sich eine erhebliche Reduzierung der Kaltkanallänge, welche die Austrittsöffnung der Einspritzdüse bzw. Heißkanaldüse mit der Anspritzlasche am Bauteil bzw. dem Anguss der Kavität verbindet. Dabei kann die Einspritzdüse sowohl außerhalb der Kontur des herzustellenden Bauteils, unmittelbar neben dieser, aber auch innerhalb der Bauteilkontur, beispielsweise in einer Durchbrechung des Kunststoffbauteils, angeordnet werden. Außerdem kann die Heißkanaldüse innerhalb eines den Folienabschnitt an einer der Werkzeughälften fixierenden Klemmrahmens angeordnet werden, sodass der Kaltkanal diesen nicht überwinden bzw. passieren muss. Durch die geringe Kaltkanallänge und wenige Konturversprünge ergeben sich nur sehr geringe Temperatur- und Druckverluste beim Einspritzen der Kunststoffmasse. Hierdurch kann die erforderliche Prozesssicherheit des Verfahrens gewährleistet werden.

Üblicherweise sind bei den aus dem Stand der Technik bekannten Spritzgießwerkzeugen bzw. IMD-Werkzeugen die Einspritzdüse zum Einspritzen des Kunststoffs in die Kavität, die Schieber zur Herstellung von Kunststoffbauteilen mit Hinterschneidungen und der Auswerfer zur Entfernung des fertigen Kunststoffbauteils aus der zweiten Werkzeughälfte vorgesehen, welche an der ortsfesten Maschinenplatte des Spritzgießwerkzeugs angeordnet ist, während die Folienbahn und die Einrichtungen zum Transport und zum Abwickeln bzw. Aufwickeln der Folienbahn der ersten, an der beweglichen Maschinenplatte angeordneten Werkzeughälfte zugeordnet sind. Durch das erfindungsgemäße Verfahren ist es nunmehr erstmals möglich, dass der Schieber und der Auswerfer sowie deren Mechanik der ersten Werkzeughälfte bzw. der beweglichen Maschinenplatte zugeordnet werden können und die Einspritzdüse sowie die Folienbahn mit den Einrichtungen zum Transport der zweiten Werkzeughälfte bzw. der ortsfesten Maschinenplatte zugeordnet werden können.

Hierdurch kann die Werkzeugtechnik wesentlich vereinfacht werden. Durch den Wechsel des Schiebers, des Auswerfers und deren Mechanik in die erste, an der beweglichen Maschinenplatte angeordnete Werkzeughälfte steht für die Schieber bzw. Segmente und Auswerfer sowie deren Mechanik ein größerer Bauraum zur Verfügung, sodass beispielsweise die Schieber und Segmente insgesamt stabiler ausgelegt werden können. Hierdurch können die Stillstandzeiten des Spritzgießwerkzeugs aufgrund von defekten Schiebern, Segmenten oder Auswerfern minimiert und die Prozesssicherheit erhöht werden. Außerdem kann der in der beweglichen Maschinenplatte ohnehin vorhandene Zentralausstoßer zur Betätigung des Auswerfers bzw. zur Betätigung des Schiebers verwendet werden, sodass auf eine separate hydraulisch angetriebene Betätigungseinrichtung verzichtet werden kann. Hiermit verbunden ist ein Entfall von Hydraulikzylindern, Schläuchen, Rohren, Anschlüssen sowie deren Steuerung, wodurch sich neben der Vereinfachung der Werkzeugtechnik auch eine Kostenersparnis ergibt. Weiterhin steht auch in der zweiten Werkzeughälfte, welche der festen Maschinenplatte zugeordnet ist, ein größerer Bauraum zur Kühlung der Einspritzdüse zur Verfügung. Durch den zur Verfügung stehenden Bauraum ist es außerdem möglich, die Anzahl an Einspritzdüsen zu erhöhen, wodurch die Prozesssicherheit des Verfahrens ebenfalls erhöht wird. Zusätzlich ergeben sich durch eine derartige Aufteilung der Komponenten auf die beiden Werkzeughälften Vorteile bei der Wartung, da nur die Werkzeughälfte mit den beweglichen Elementen wie Auswerfer, Schieber und Segmente gewartet werden muss. Die Werkzeughälfte mit der Einspritzdüse bleibt davon unberührt.

Eine besonders zweckmäßige Weiterbildung des erfindungsgemäßen Verfahrens wird auch dadurch erreicht, dass die Durchbrechung während einer Schließbewegung der geöffneten Werkzeughälften in die Folienbahn eingebracht wird. Hierdurch entfallen zusätzliche vorgelagerte Arbeitsschritte zum Einbringen der Durchbrechung in die Folienbahn und es können weiterhin die bei dem herkömmlichen, aus dem Stand der Technik bekannten IMD-Verfahren eingesetzten Folienbahn-Rollen verwendet werden.

In diesem Fall erweist es sich als vorteilhaft, wenn die Durchbrechung in den Folienabschnitt der Folienbahn eingebracht wird, welcher bei geschlossenen Werkzeughälften in der Kavität angeordnet ist. Dabei wird zunächst der noch keine Durchbrechung aufweisende Folienabschnitt zwischen den beiden Werkzeughälften angeordnet und die Kavität geschlossen. Bei oder nach dem Schließen wird dann eine Durchbrechung in dem Folienabschnitt erzeugt, durch welche dann unmittelbar im Anschluss die Kunststoffmasse in die Kavität eingefüllt wird.

Ein weiteres erfindungsgemäßes Merkmal besteht darin, dass die Durchbrechung durch Stanzen in den Folienabschnitt oder die Folienbahn eingebracht wird, wobei einer Werkzeughälfte eine Schneidmatrize und der anderen Werkzeughälfte ein zumindest teilweise in die Schneidmatrize eintauchender Schneidstempel zugeordnet ist. Hierdurch lässt sich eine Durchbrechung mit definierten Abmessungen und sauberen Schnittkanten in die Folienbahn bzw. den Folienabschnitt einbringen. Dabei kann das Material der Durchbrechung vollständig aus dem Folienabschnitt ausgestanzt werden, wobei der dabei entstehende Schnittabfall abgeführt werden muss. Alternativ ist es möglich, die Durchbrechung nur teilweise in die Folienbahn einzubringen. Hierbei wird die Folienbahn nicht umlaufend eingeschnitten, sondern die Einschnitte erfolgen partiell. Hierbei entsteht kein Schnittabfall, da der die Durchbrechung freigebende Abschnitt mit dem Folienabschnitt bzw. der Folienbahn verbunden bleibt.

Eine besonders einfache Möglichkeit, die Durchbrechung in die Folienbahn bzw. den Folienabschnitt einzubringen, besteht darin, dass die Durchbrechung durch einen Dorn hergestellt wird. Hierbei wird der Dorn an einer der Werkzeughälften fixiert. Beim Schließen der beiden Werkzeughälften kommt es zu einem Kontakt des Dorns bzw. der Dornspitze mit dem Folienabschnitt und die Dornspitze bohrt sich während der Schließbewegung durch den Folienabschnitt hindurch und bringt dabei die Durchbrechung in den Folienabschnitt ein.

Die Herstellung der Durchbrechung in der Folienbahn wird auch dadurch erleichtert, dass der Folienabschnitt oder die Folienbahn während des Einbringens der Durchbrechung durch einen Niederhalter fixiert wird. Durch die Fixierung wird die Folienbahn in einer definierten Lage gehalten und gespannt, sodass die Durchbrechung prozesssicher an der gewünschten Position in die Folienbahn eingebracht werden kann.

Eine nicht erfindungsgemäße Alternative zum beschriebenen erfindungsgemäßen Verfahren sieht vor, dass die Durchbrechung in einen dem in der Kavität angeordneten Folienabschnitt benachbarten und außerhalb der Kavität angeordneten Bereich der Folienbahn eingebracht wird. Dabei wird beim Schließen der Werkzeughälften ein bereits mit einer Durchbrechung versehener Folienabschnitt zwischen den beiden Werkzeughälften in der Kavität angeordnet und zeitgleich beim Schließen der beiden Werkzeughälften in einem benachbarten Folienabschnitt eine Durchbrechung erzeugt. Nach dem Einspritzen der Kunststoffmasse in die Kavität und der Entnahme des fertigen Kunststoffbauteils aus dem Spritzgießwerkzeug wird dann die Folienbahn weiter abgerollt, sodass der Folienabschnitt mit der während des vorangegangenen Herstellungsprozesses hergestellten Durchbrechung für den nachfolgenden Herstellungsprozess des nächsten Kunststoffbauteils zur Verfügung steht.

Eine weitere nicht erfindungsgemäße Alternative zum offenbarten erfindungsgemäßen Verfahren zeichnet sich dadurch aus, dass im Bereich der Durchbrechung eine Solltrennlinie, insbesondere in Form von Löchern und/oder Einschnitten, in den Folienabschnitt eingebracht wird und dass durch das Einspritzen der Kunststoffmasse der Folienabschnitt entlang dieser Trennlinie zumindest abschnittsweise unter Bildung der Durchbrechung getrennt wird. Hierbei wird die Solltrennlinie beispielsweise durch eine Perforation oder durch mehrere in einem Abstand zueinander angeordnete Schnittlinien erzeugt, wobei die Solltrennlinie beim Auftreffen der unter Druck eingebrachten Kunststoffmasse reißt.

Eine wiederum abgewandelte zweckmäßige nicht erfindungsgemäße Alternative zum genannten erfindungsgemäßen Verfahren wird auch dadurch geschaffen, dass die Durchbrechung ausschließlich durch die unter Druck auf den in der Kavität angeordneten Folienabschnitt treffende Kunststoffmasse eingebracht wird. In diesem Fall sind keine Arbeits- bzw. Verfahrensschritte zum vollständigen oder partiellen Einschneiden und Trennen der Folienbahn bzw. des Folienabschnitts erforderlich.

Zur Durchführung des erfindungsgemäßen Verfahrens ist ein Spritzgießwerkzeug vorgesehen, welches aus zumindest zwei zwischen einer geöffneten und einer geschlossenen Stellung relativ zueinander verfahrbaren Werkzeughälften und einer zwischen den beiden Werkzeughälften hindurchziehbaren und aus einer Trägerschicht und einer Dekorschicht bestehenden Folienbahn besteht, wobei ein Folienabschnitt der Folienbahn derart zwischen den beiden Werkzeughälften angeordnet ist, dass die Dekorschicht einer eine Negativform einer Sichtfläche eines Kunststoffbauteils abbildenden Werkzeugoberfläche abgewandt ist, wobei eine Einspritzdüse zum Einspritzen von Kunststoffmasse in eine sich zwischen den geschlossenen Werkzeughälften ausbildende Kavität derjenigen Werkzeughälfte zugeordnet ist, in welcher auch die die Negativform der Sichtfläche des Kunststoffbauteils abbildende Werkstückoberfläche integriert ist, wobei die Kunststoffmasse durch eine Durchbrechung in dem Folienabschnitt derart in die Kavität einspritzbar ist, dass die plastifizierte Kunststoffmasse den Folienabschnitt unter Kontakt mit der Dekorschicht gegen die die Negativform der Sichtfläche des Kunststoffbauteils abbildende Werkzeugoberfläche drückt.

Hierdurch wird gewährleistet, dass die die Kunststoffmasse in die Kavität einspritzende Einspritzdüse in der ortsfesten Maschinenplatte, nahe der Kontur des herzustellenden Kunststoffbauteils innerhalb der Folienbahn angeordnet werden kann. Hieraus resultiert eine erhebliche Reduzierung der Kaltkanallänge, welche die Austrittsöffnung mit der Anspritzlasche am Bauteil bzw. dem Anguss der Kavität verbindet. Dabei kann die Einspritzdüse sowohl außerhalb des herzustellenden Bauteils, unmittelbar neben diesem, aber auch innerhalb, beispielsweise in einer Durchbrechung des Bauteils angeordnet werden. Außerdem kann die Position der Heißkanaldüse innerhalb des Klemmrahmens angeordnet werden, sodass der Kaltkanal diesen nicht überwinden bzw. passieren muss. Durch die geringe Kaltkanallänge und wenige Konturversprünge ergeben sich nur sehr geringe Temperatur- und Druckverluste beim Einspritzen der Kunststoffmasse.

Außerdem kann die der Dekorschicht zugewandte Werkzeughälfte zumindest einen Schieber zur Herstellung einer Hinterschneidung und/oder einen Auswerfer zur Entfernung des Kunststoffbauteils aus der Kavität aufweisen. Durch die Anordnung der zur Erzeugung von Kunststoffbauteilen mit einer Hinterschneidung erforderlichen Schieber in der ersten, an der beweglichen Maschinenplatte angeordneten Werkzeughälfte wird ein größerer Bauraum für die Mechanik und Auslegung der Schieber und Segmente zur Verfügung gestellt. Die Schieber können insgesamt stabiler ausgelegt werden, wodurch die Stillstandzeiten des Spritzgießwerkzeugs aufgrund defekter Schieber minimiert und die Prozesssicherheit gesteigert werden.

Weiterhin kann vorgesehen sein, dass die Einrichtungen zur Aufnahme und zum Vorschub der Folienbahn an der Werkzeughälfte angeordnet sind, in welcher auch die Einspritzdüse und die die Negativform der Sichtfläche des Kunststoffbauteils abbildende Werkzeugoberfläche integriert sind. Die Anordnung der Folienbahn an der ortsfesten Maschinenplatte hat gegenüber der Anordnung der Folienbahn an der beweglichen Maschinenplatte den Vorteil, dass die Folienbahn weniger Luftbewegungen ausgesetzt ist. Hierdurch kann der Ausschuss bei der Herstellung der Kunststoffbauteile minimiert werden, da diese weniger aus Staub oder Verunreinigungen resultierende Oberflächenfehler aufweisen.

Nachfolgend werden verschiedene Verfahren zur Herstellung eines Kunststoffbauteils anhand der Figuren 1 bis 13 beschrieben. Diese zeigen in
- Fig. 1: eine perspektivische Darstellung eines mittels des erfindungsgemäßen Verfahrens hergestellten Kunststoffbauteils;
- Fig. 2: eine rückseitige Ansicht des in Figur 1 dargestellten Kunststoffbauteils;
- Fig. 3: eine Prinzipskizze eines Spritzgießwerkzeugs zur Herstellung des in den Figuren 1 und 2 dargestellten Kunststoffbauteils;
- Fig. 4: eine vergrößerte und geschnittene Prinzipdarstellung der beiden in der geöffneten Stellung angeordneten Werkzeughälften des in Figur 3 dargestellten Spritzgießwerkzeugs;
- Fig. 5: die in Figur 4 dargestellten Werkzeughälften in einer geschlossenen Stellung nach dem Einspritzen der Kunststoffmasse;
- Fig. 6: die in der geöffneten Stellung angeordneten Werkzeughälften mit dem hergestellten Kunststoffbauteil;
- Fig. 7: die in der geschlossenen Stellung angeordneten Werkzeughälften mit einer Schneidmatrize und einem Schneidstempel zum Einbringen einer Durchbrechung in die Folienbahn;
- Fig. 8: einen Ausschnitt der in der geschlossenen Stellung angeordneten Werkzeughälften mit einem Schneidstempel und einer Schneidmatrize zum Einbringen der Durchbrechung in den Folienabschnitt;
- Fig. 9: den in Figur 8 dargestellten Ausschnitt der in der geschlossenen Stellung angeordneten Werkzeughälften mit zwei Niederhaltern;
- Fig. 10: einen Ausschnitt der in der geschlossenen Stellung angeordneten Werkzeughälften mit einem Dorn zum Einbringen der Durchbrechung in den Folienabschnitt;
- Fig. 11: einen Ausschnitt der in der geschlossenen Stellung angeordneten Werkzeughälften, wobei die Durchbrechung ausschließlich durch die Kunststoffmasse in den Folienabschnitt eingebracht wird;
- Fig. 12: einen Ausschnitt der beiden Werkzeughälften mit einem in einer ersten Stellung angeordneten Schrägschieber;
- Fig. 13: den Ausschnitt aus Figur 12 mit dem in der Teilentnahmeposition angeordneten Schrägschieber.

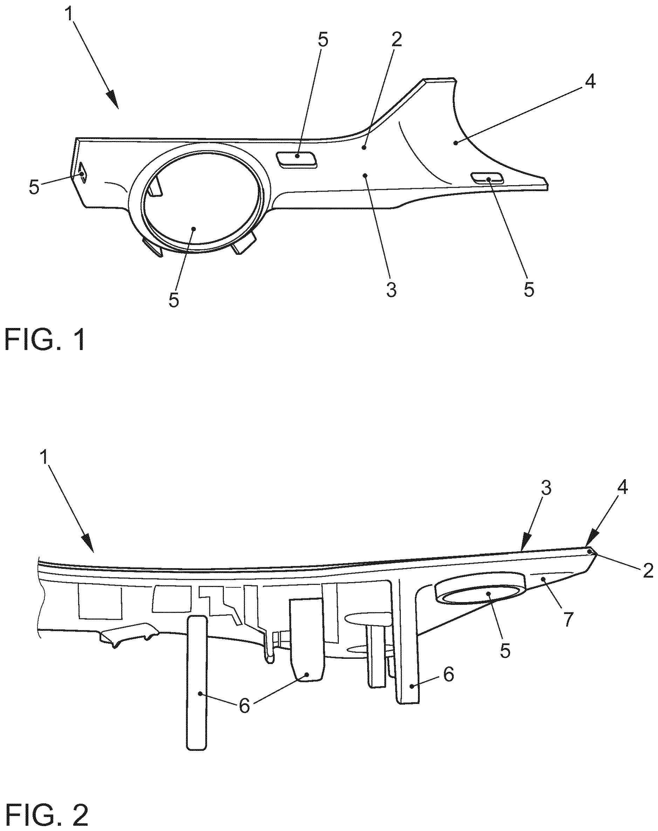

Figur 1 zeigt eine perspektivische Darstellung eines mittels des erfindungsgemäßen Verfahrens hergestellten und als Verkleidungsteil und/oder Dekorteil eines Kraftfahrzeugs ausgebildeten Kunststoffbauteils 1. In beispielhafter Ausführung wird hier eine Blende für den Fahrzeuginnenraum beschrieben. Figur 2 zeigt eine rückseitige Ansicht des in Figur 1 dargestellten Kunststoffbauteils 1 in einer perspektivischen Darstellung. Das Kunststoffbauteil 1 besteht aus einem Kunststoffkörper 2 und einer mit dem Kunststoffkörper 2 verbundenen und eine Sichtfläche 3 des Kunststoffbauteils 1 bildenden Dekorbeschichtung 4, beispielsweise einer Lackschicht. Das Kunststoffbauteil 1 weist mehrere Öffnungen 5 und mehrere als Stege und/oder Rastelemente ausgebildete Vorsprünge 6 zur Positionierung und Fixierung des Kunststoffbauteils 1 an einem Trägerbauteil des Kraftfahrzeugs auf. Dabei sind diese Vorsprünge 6 auf einer der Sichtfläche 3 abgewandten Rückseite 7 des Kunststoffbauteils 1 angeordnet.

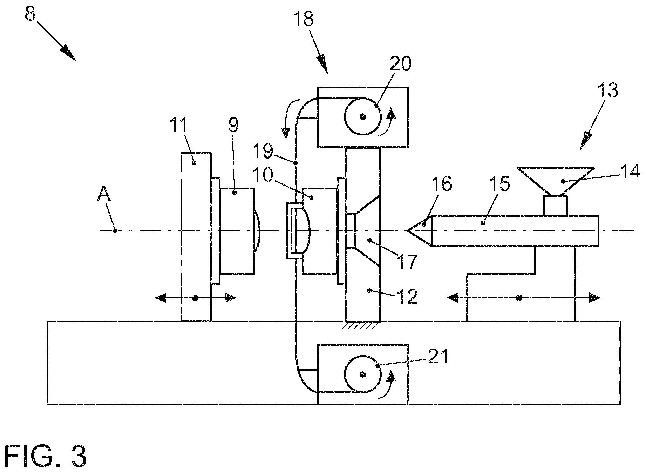

Figur 3 zeigt eine Prinzipskizze eines Spritzgießwerkzeugs 8 zur Herstellung des in den Figuren 1 und 2 dargestellten Kunststoffbauteils 1. Das Spritzgießwerkzeug 8 weist ein aus zwei Werkzeughälften 9, 10 bestehendes Formwerkzeug auf, welche in Figur 3 in einer geöffneten Stellung dargestellt sind. Die in Figur 3 links dargestellte erste Werkzeughälfte 9 ist an einer beweglichen Maschinenplatte 11 angeordnet, welche längs einer schematisch angedeuteten Achse A verschiebbar ist, und zwar relativ zu der ortsfest angeordneten Maschinenplatte 12. Die andere, in Figur 3 rechts dargestellte zweite Werkzeughälfte 10 ist an der ortsfesten Maschinenplatte 12 fixiert. Zum Schließen der beiden Werkzeughälften 9, 10 wird die bewegliche Maschinenplatte 11 zusammen mit der ersten Werkzeughälfte 9 relativ zu der ortsfesten Maschinenplatte 12 mit der zweiten Werkzeughälfte 10 verfahren. Während bzw. nach Abschluss der Schließbewegung bildet sich zwischen den nunmehr aneinander anliegenden Werkzeughälften 9, 10 eine das Kunststoffbauteil 1 abbildende und in Figur 3 nicht dargestellte Kavität aus.

Außerdem weist das Spritzgießwerkzeug 8 eine Zuführeinheit 13 für plastifizierte Kunststoffmasse auf, welche einen Trichter 14, eine Plastifizier- und Transporteinheit 15 sowie eine Düse 16 umfasst. Die Zuführeinheit 13 ist ebenfalls entlang der Achse A relativ zu der ortsfesten Maschinenplatte 12 verschiebbar, um durch eine Öffnung 17 in der ortsfesten Maschinenplatte 12 hindurch die plastifizierte Kunststoffmasse in die Kavität zwischen den beiden Werkzeughälften 9, 10 einzuspritzen.

Weiterhin weist das Spritzgießwerkzeug 8 eine an der ortsfesten Maschinenplatte 12 angeordnete Folienvorschubeinheit 18 auf, mittels welcher eine Folienbahn 19 von einer Abwickeleinheit 20 zu einer Aufwickeleinheit 21 transportierbar ist (siehe Richtungspfeile). Sowohl die Abwickeleinheit 20 als auch die Aufwickeleinheit 21 sind durch entsprechende Rollen gebildet, auf welchen die Folienbahn 19 aufgewickelt ist. Dabei ist die Folienbahn 19 durch einen entsprechenden, in Figur 3 nicht dargestellten Transportantrieb von der Abwickeleinheit 20 abwickelbar und auf die Aufwickeleinheit 21 aufwickelbar.

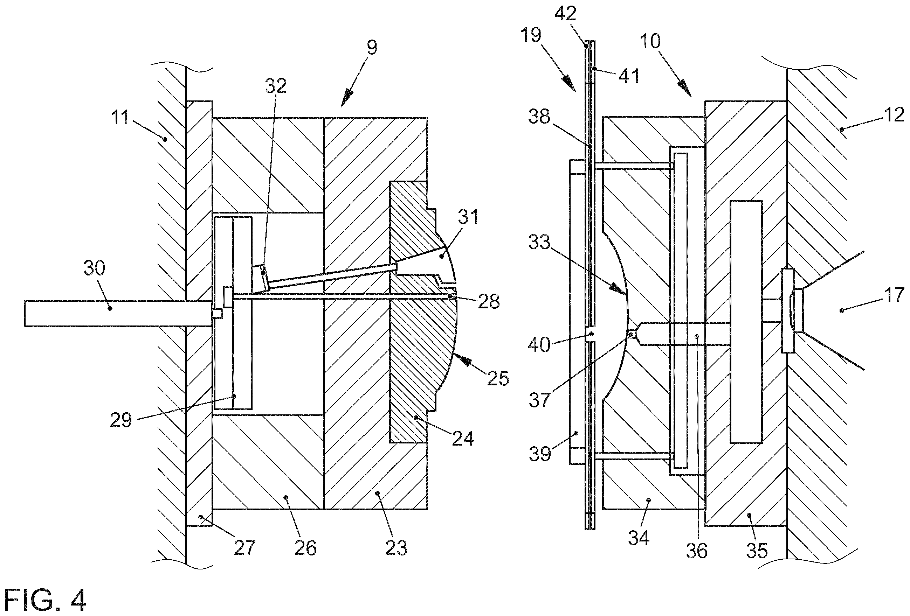

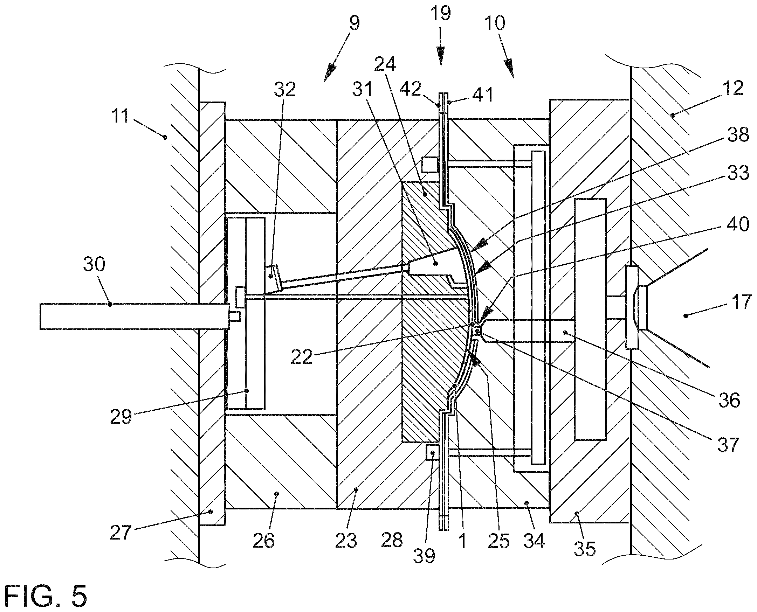

Figur 4 zeigt eine vergrößerte und geschnittene Prinzipdarstellung der in Figur 3 dargestellten und an den Maschinenplatten 11, 12 angeordneten Werkzeughälften 9, 10 in der geöffneten Stellung. Dagegen zeigt Figur 5 die Werkzeughälften 9, 10 in einer geschlossenen Stellung, und zwar nach dem Einspritzen der Kunststoffmasse in eine sich beim Schließen der Werkzeughälften 9, 10 zwischen diesen ausbildende Kavität 22.

Die an der beweglichen Maschinenplatte 11 angeordnete erste Werkzeughälfte 9 weist einen in einer Kernhalteplatte 23 angeordneten Kern 24 auf. Eine der zweiten Werkzeughälfte 10 zugewandte Oberfläche 25 des Kerns 24 begrenzt bei geschlossenen Werkzeughälften 9, 10 die Kavität 22 und bildet die Rückseite 7 des Kunststoffbauteils 1 ab. Die Kernhalteplatte 23 ist über Distanzleisten 26 mit einer Aufspannplatte 27 verbunden, welche wiederum an der beweglichen Maschinenplatte 11 fixiert ist. Der ersten Werkzeughälfte 9 ist außerdem noch ein Auswerfer 28 zur Entfernung des hergestellten Kunststoffbauteils 1 aus der Kavität 22 bzw. aus der ersten Werkzeughälfte 9 zugeordnet, welcher über eine Auswerferplatte 29 mit einem in der beweglichen Maschinenplatte 11 integrierten Zentralausstoßer 30 verbunden ist. Zur Herstellung einer Hinterschneidung an dem Kunststoffbauteil 1 bzw. zur Herstellung eines in Figur 2 dargestellten und eine Hinterschneidung aufweisenden Vorsprungs 6 ist in der ersten Werkzeughälfte 9 ein als Schrägschieber ausgebildeter Schieber 31 vorgesehen. Dabei ist der Schieber 31 über eine schräg ausgeführte Schiebeführung 32 an der Auswerferplatte 29 gelagert.

Die an der ortsfesten Maschinenplatte 12 angeordnete zweite Werkzeughälfte 10 weist eine die Negativform der Sichtfläche 3 des Kunststoffbauteils 1 abbildende Werkzeugoberfläche 33 auf, welche zusammen mit der Oberfläche 25 des Kerns 24 der ersten Werkzeughälfte 9 die Kavität 22 zwischen den beiden geschlossenen Werkzeughälften 9, 10 begrenzt. Die die Sichtfläche 3 abbildende Werkzeugoberfläche 33 ist in einer Formplatte 34 der zweiten Werkzeughälfte 10 angeordnet. Die Formplatte 34 ist über eine Zwischenplatte 35 mit der ortsfesten Maschinenplatte 12 verbunden. Außerdem weist die zweite Werkzeughälfte 10 einen zum Transport der plastifizierten Kunststoffmasse vorgesehenen Heißkanal 36 auf, welcher sich von der Öffnung 17 in der ortsfesten Maschinenplatte 12 durch die Zwischenplatte 35 und die Formplatte 34 hindurch bis zu einer in die Kavität 22 mündenden Einspritzdüse 37 erstreckt. Dem Heißkanal 36 ist eine in den Figuren nicht dargestellte Kühlung zugeordnet. Zur Fixierung eines zwischen der Werkzeugoberfläche 33 der zweiten Werkzeughälfte 10 und der Oberfläche 25 des Kerns 24 der ersten Werkzeughälfte 9 angeordneten Folienabschnitts 38 der Folienbahn 19 ist ein beweglich in der zweiten Werkzeughälfte 10 gelagerter Klemmrahmen 39 vorgesehen.

Die Herstellung des in den Figuren 1 und 2 dargestellten Kunststoffbauteils 1 wird nachfolgend anhand der Figuren 4 bis 6 beschrieben. Zunächst wird ein eine Durchbrechung 40 aufweisender Folienabschnitt 38 der aus einer Trägerschicht 41 und einer Dekorschicht 42 bestehenden Folienbahn 19 derart zwischen den beiden in Figur 4 dargestellten geöffneten Werkzeughälften 9, 10 angeordnet, dass die Dekorschicht 42 des Folienabschnitts 38 einer die Negativform der Sichtfläche 3 des Kunststoffbauteils 1 abbildenden Werkzeugoberfläche 33 der zweiten Werkzeughälfte 10 abgewandt ist. Die beispielsweise als Lackschicht ausgebildete Dekorschicht 42 ist also der ersten Werkzeughälfte 9 bzw. dem Kern 24 zugewandt und die als Polyester-Folie ausgebildete Trägerschicht 41 ist der zweiten Werkzeughälfte 10 bzw. der Oberfläche 33 zugewandt (Figur 4).

Anschließend werden die beiden Werkzeughälften 9, 10 durch eine Verfahrbewegung der beweglichen Maschinenplatte 11 in Richtung der ortsfesten Maschinenplatte 12 geschlossen, sodass sich zwischen den beiden Werkzeughälften 9, 10 die das Kunststoffbauteil 1 abbildende Kavität 22 ausbildet (Figur 5). Dann wird die Kunststoffmasse über die Düse 16 der Zuführeinheit 13 in die Öffnung 17 der ortsfesten Maschinenplatte 12 in den Heißkanal 36 der zweiten Werkzeughälfte 10 eingebracht. Die Kunststoffmasse gelangt durch die Zwischenplatte 35 und die Formplatte 34 zur Einspritzdüse 37 und wird von dieser dann durch die Durchbrechung 40 in dem Folienabschnitt 38 hindurch in die Kavität 22 eingespritzt. Dabei wird die plastifizierte Kunststoffmasse derart durch die Durchbrechung 40 hindurch in einen von der Dekorschicht 42 und der Oberfläche 25 des Kerns 24 gebildeten Raum der Kavität 22 eingespritzt, dass die Kunststoffmasse den Folienabschnitt 38 unter Kontakt mit der Dekorschicht 42 gegen die die Negativform der Sichtfläche 3 des Kunststoffbauteils 1 abbildende Werkzeugoberfläche 33 der Kavität 22 drückt, wobei die Trägerschicht 41 des Folienabschnitts 38 nach Abschluss des Einspritzens der Kunststoffmasse bei einer vollständig mit der Kunststoffmasse gefüllten Kavität 22 vollflächig an der die Negativform der Sichtfläche 3 des Kunststoffbauteils 1 abbildenden Werkzeugoberfläche 33 der Kavität 22 anliegt. Beim Abkühlen der eingespritzten Kunststoffmasse bildet sich aus dieser der Kunststoffkörper 2 aus, welcher sich unter Bildung des Kunststoffbauteils 1 stoffschlüssig mit der Dekorschicht 42 des Folienabschnitts 38 verbindet.

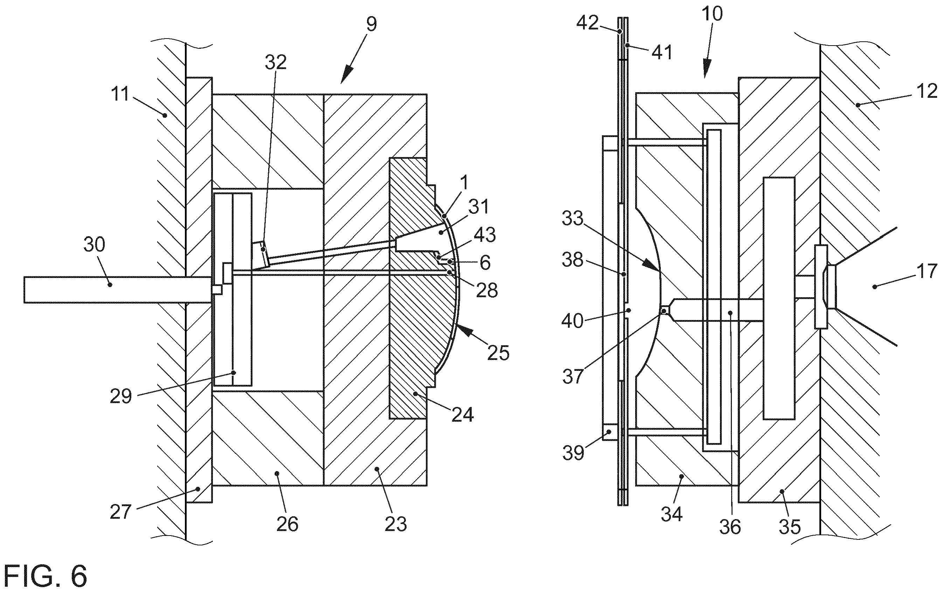

Im Anschluss werden die beiden Werkzeughälften 9, 10 durch eine Verfahrbewegung der beweglichen Maschinenplatte 11 relativ zur ortsfesten Maschinenplatte 12 wieder geöffnet, sodass sich die Werkzeughälften 9, 10 in der in Figur 6 dargestellten Stellung befinden und das hergestellte Kunststoffbauteil 1 aus dem Spritzgießwerkzeug 8 bzw. von der ersten Werkzeughälfte 9 entfernt werden kann.

Beim oder nach dem Öffnen der Werkzeughälften 9, 10 wird die Trägerschicht 41 von der stoffschlüssig mit dem Kunststoffkörper 2 verbundenen und die Sichtfläche 3 des Kunststoffbauteils 1 bildenden Dekorschicht 42 abgezogen.

Zur Entfernung des Kunststoffbauteils 1 aus den Werkzeughälften 9, 10 wird die Auswerferplatte 29 durch den Zentralausstoßer 30 der beweglichen Maschinenplatte 11 in Richtung des Kerns 24 und relativ zu diesem bewegt, sodass sich der mit der Auswerferplatte 29 verbundene Auswerfer 28 aus der Kontur der Oberfläche 25 des Kerns 24 herausbewegt und das Kunststoffbauteil 1 von dem Kern 24 löst. Durch die Bewegung der Auswerferplatte 29 wird auch der für die Herstellung des Vorsprungs 6 am Kunststoffbauteil 1 vorhandene Schieber 31 relativ zu dem Kern 24 bewegt. Dadurch, dass der Schieber 31 über eine schräg ausgebildete Schiebeführung 32 an der Auswerferplatte 29 gelagert ist, verfährt der Schieber 31 schräg nach oben aus der Kontur der Oberfläche 25 des Kerns 24 und dadurch auch gleichzeitig aus der Hinterschneidung 43 des Vorsprungs 6 des Kunststoffbauteils 1 heraus.

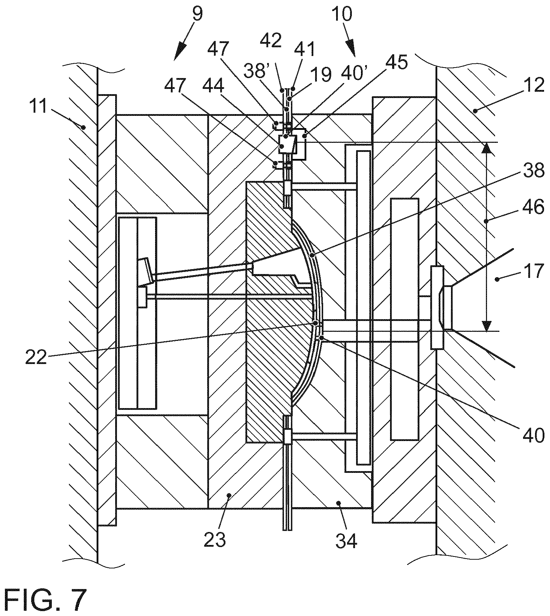

Für den nachfolgenden Verfahrenszyklus wird die Folienbahn 19 dann durch die der ortsfesten Maschinenplatte 12 zugeordneten Folienvorschubeinheit 18 von der Abwickeleinheit 20 abgewickelt und in Richtung des in Figur 6 dargestellten Pfeils transportiert, bis ein in Figur 7 dargestellter nachfolgender Folienabschnitt 38' der Folienbahn 19 in der in Figur 4 dargestellten Lage zwischen den beiden Werkzeughälften 9, 10 angeordnet ist. Der im aktuellen Verfahrenszyklus genutzte, zumindest abschnittsweise keine Dekorschicht 42 mehr aufweisende und nur noch aus der Trägerschicht 41 bestehende Folienabschnitt 38 (Figur 6) wird gleichzeitig mit dem Abwickeln der Folienbahn 19 von der Abwickeleinheit 20 auf der Aufwickeleinheit 21 aufgewickelt (siehe auch Figur 3).

Die Durchbrechung 40 in dem Folienabschnitt 38 kann gemäß einer nicht erfindungsgemäßen Alternative zum erfindungsgemäßen Verfahren, wie in Figur 7 dargestellt, durch Stanzen, und zwar während der bzw. durch die Schließbewegung der beiden Werkzeughälften 9, 10 eingebracht werden. Dabei zeigt Figur 7, ähnlich wie Figur 5, die Werkzeughälften 9, 10 in der geschlossenen Stellung. Die erste Werkzeughälfte 9 weist einen in der Kernhalteplatte 23 angeordneten Schneidstempel 44 und die zweite Werkzeughälfte 10 eine in der Formplatte 34 angeordnete Schneidmatrize 45 auf. Während der Schließbewegung der beiden Werkzeughälften 9, 10 taucht der Schneidstempel 44 in die Schneidmatrize 45 und schneidet bzw. stanzt dabei die Durchbrechung 40' in die Folienbahn 19. Die Durchbrechung 40' wird also außerhalb der Kavität 22 in die Folienbahn 19 bzw. einen Folienabschnitt 38' der Folienbahn 19 eingebracht, welcher für den nachfolgenden Verfahrenszyklus verwendet wird. Nach der Entnahme des in Figur 7 in der Kavität 22 angeordneten Kunststoffbauteils 1 aus dem Spritzgießwerkzeug 8 wird die Folienbahn 19 weiter transportiert, sodass der Folienabschnitt 38' mit der gerade hergestellten Durchbrechung 40' zwischen den beiden Werkzeughälften 9, 10 angeordnet ist. Hierbei ist der Hub 46 des Folienvorschubs so gewählt, dass die zuvor gestanzte Durchbrechung 40' unmittelbar vor der Öffnung der Einspritzdüse 37 angeordnet ist. Die Herstellung eines Kunststoffbauteils 1 und die Herstellung der Durchbrechung 40' für den nachfolgenden Verfahrenszyklus erfolgt also parallel. Zur Fixierung der Folienbahn 19 während des Einbringens der Durchbrechung 40' sind Niederhalter 47 vorgesehen, welche der ersten Werkzeughälfte 9 bzw. der Kernhalteplatte 23 zugeordnet sind. Selbstverständlich kann der Schneidstempel 44 auch der zweiten Werkzeughälfte10 bzw. die Schneidmatrize 45 der ersten Werkzeughälfte 9 zugeordnet sein.

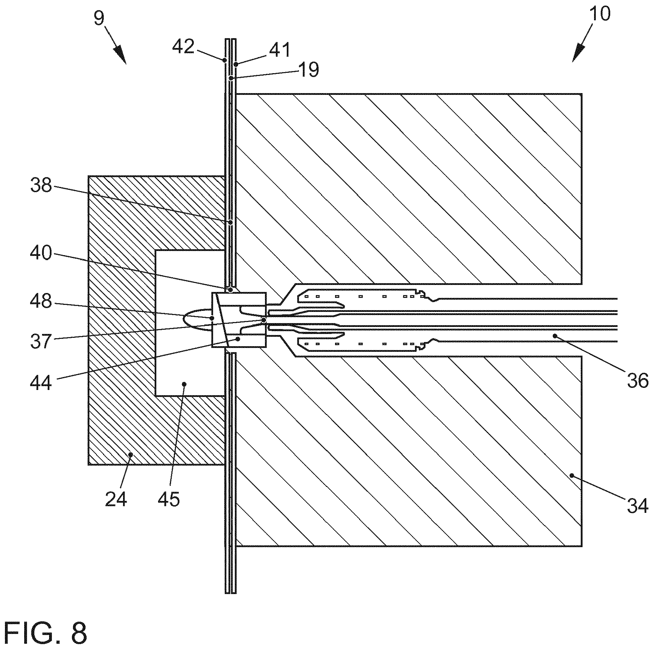

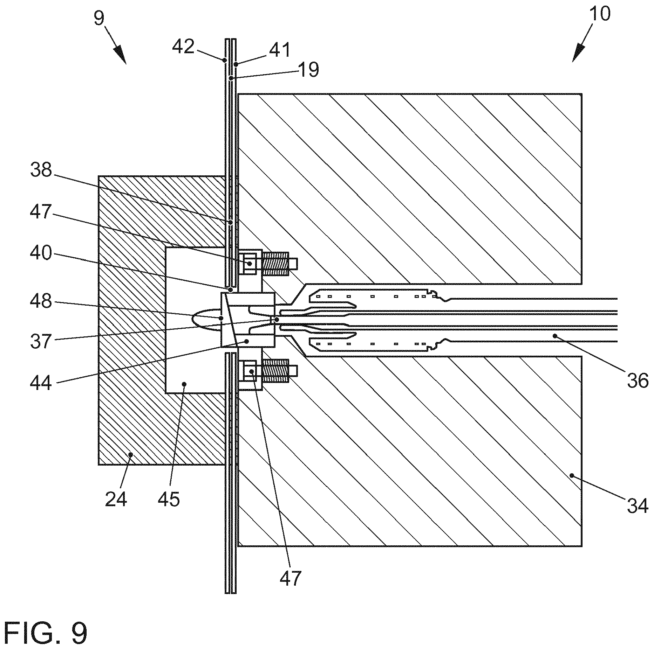

Die Figuren 8 und 9 zeigen jeweils einen Ausschnitt der in der geschlossenen Stellung angeordneten Werkzeughälften 9, 10, wobei die Durchbrechung 40 erfindungsgemäß in den Folienabschnitt 38 der Folienbahn 19 einbracht wird, welcher bei geschlossenen Werkzeughälften 9, 10 in der Kavität 22 bzw. zwischen der Oberfläche 25 des Kerns 24 und der die Negativform der Sichtfläche 3 des Kunststoffbauteils 1 abbildenden Werkzeugoberfläche 33 in der Formplatte 34 angeordnet ist. Die Durchbrechung 40 wird ebenfalls während der bzw. durch die Schließbewegung der Werkzeughälften 9, 10 in den Folienabschnitt 38 eingebracht. Hierbei ist der Schneidstempel 44 an der Formplatte 34 der zweiten Werkzeughälfte 10 angeordnet, während die Schneidmatrize 45 im Kern 24 der ersten Werkzeughälfte 9 integriert ist. Der Schneidstempel 44 und die Schneidmatrize 45 sind jeweils koaxial zu der in der zweiten Werkzeughälfte 10 angeordneten Einspritzdüse 37 angeordnet. Nach dem Einbringen der Durchbrechung 40 in den Folienabschnitt 38 wird die Kunststoffmasse dann von der Einspritzdüse 37 durch den hohl ausgebildeten Schneidstempel 44 hindurch in die Kavität 22 bzw. in einen die Einspritzdüse 37 mit der Kavität 22 verbindenden und im Kern 24 angeordneten Kaltkanal 48 gespritzt. Zusätzlich können in der Formplatte 37 Niederhalter 47 zur Fixierung des Folienabschnitts 38 während des Einbringens der Durchbrechung 40 angeordnet sein (Figur 9).

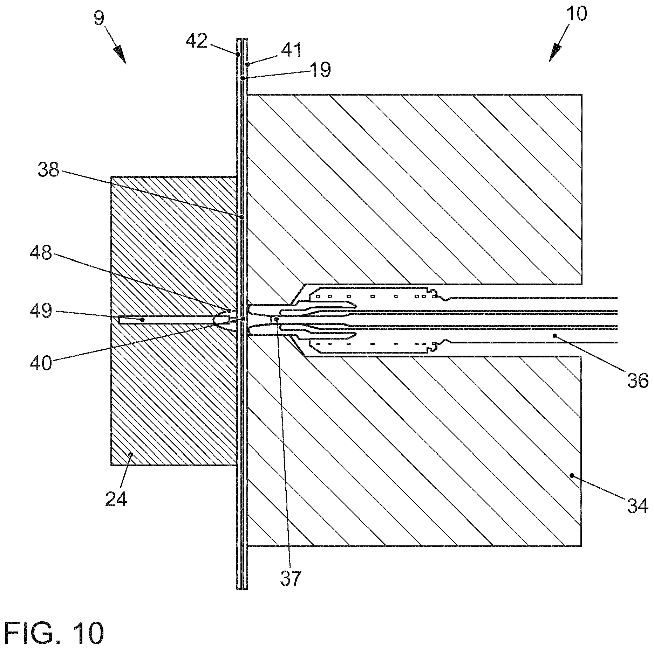

Figur 10 zeigt eine abgewandelte Ausführungsform des erfindungsgemäßen Verfahrens , nach welcher die Durchbrechung 40 in dem Folienabschnitt 38 durch einen an dem Kern 24 angeordneten Dorn 49 hergestellt wird, und zwar ebenfalls während der bzw. durch die Schließbewegung der beiden Werkzeughälften 9, 10.

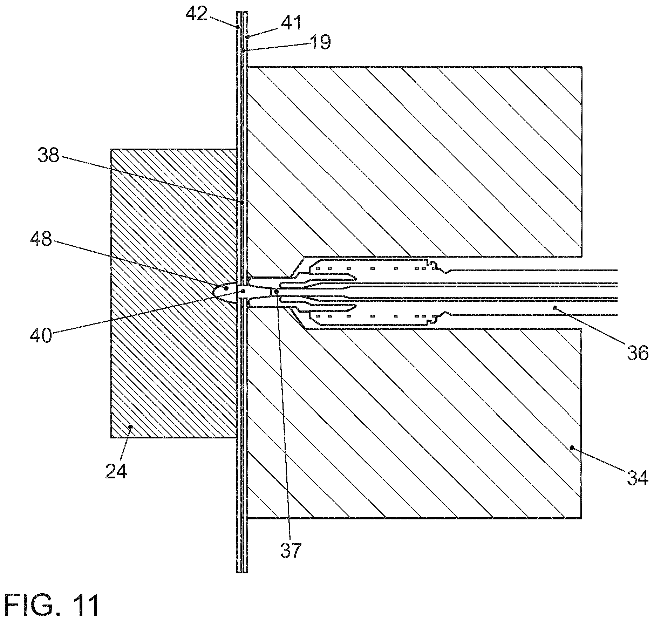

In einer wiederum abgewandelten nicht erfindungsgemäßen Ausführungsform ist vorgesehen, dass die Durchbrechung 40, wie in Figur 11 schematisch dargestellt, ausschließlich durch die unter hohem Druck auf den Folienabschnitt 38 auftreffende Kunststoffmasse in diese eingebracht wird.

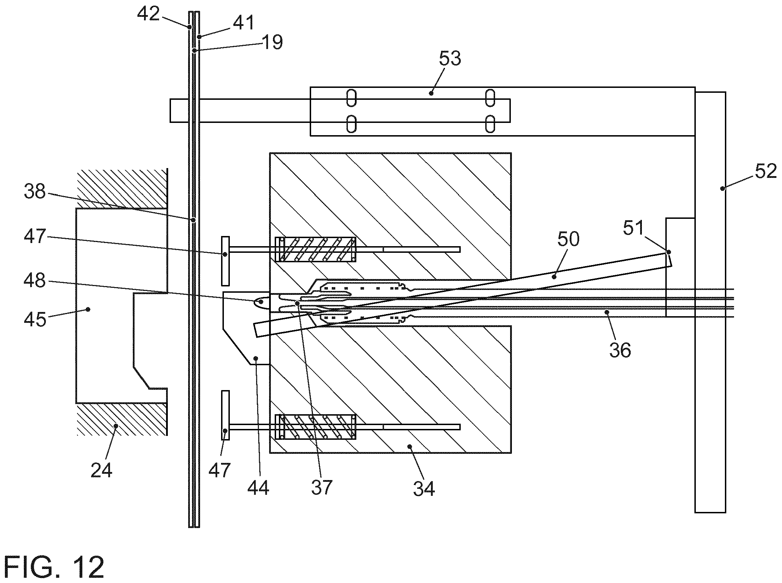

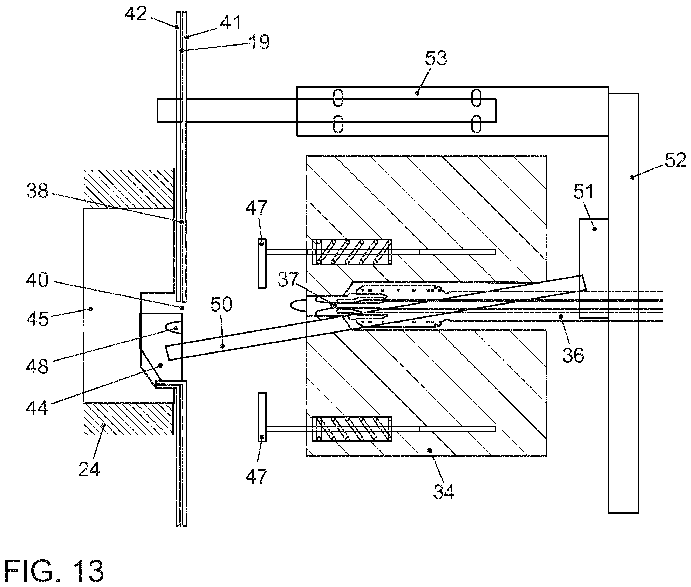

Die Figuren 12 und 13 zeigen eine Ausführungsform des erfindungsgemäßen Verfahrens , nach welcher die Durchbrechung 40 wiederum durch einen Schneidstempel 44 und eine Schneidmatrize 45 in den Folienabschnitt 38 eingebracht wird. Die Schneidmatrize 45 ist dem Kern 24 der ersten Werkzeughälfte 9 zugeordnet. Der als Schrägschieber ausgebildete Schneidstempel 44 ist über eine Schrägsäule 50 und eine Schiebeführung 51 an einer Auswerferplatte 52 der zweiten Werkzeughälfte 10 gelagert. Die Auswerferplatte 52 ist durch einen Klinkenzug 53 betätigbar. Im Schneidstempel 44 ist der Kaltkanal 48 integriert. Figur 12 zeigt eine Spritzposition des Schrägschiebers, in welcher der Schneidstempel 44 mit dem integrierten Kaltkanal 48 unmittelbar vor der Öffnung der Einspritzdüse 37 an der Formplatte 34 der zweiten Werkzeughälfte 10 anliegt, sodass die Kunststoffmasse von der Einspritzdüse 37 über den Kaltkanal 48 in die Kavität 22 gelangen kann. Figur 13 zeigt den Schrägschieber in der Teilentnahmeposition, wobei der Kaltkanal 48 durch die Überführung des Schrägschiebers von der Spritzposition in die Teilentnahmeposition entformt werden kann. Die aus der Einspritzdüse 37 austretende Kunststoffmasse gelangt durch eine derartige Ausgestaltung nicht in unmittelbaren Kontakt mit der der Formplatte 34 zugewandten Trägerschicht 41 des Folienabschnitts 38. Hierdurch können eine Verbindung zwischen der Kunststoffmasse bzw. der Einspritzdüse 37 und der Trägerschicht 41 des Folienabschnitts 38 verhindert und ein prozesssicherer Vorschub der Folienbahn 19 gewährleistet werden.

Das erfindungsgemäße Verfahren kann zur Herstellung von Verkleidungsteilen bzw. Dekorteilen für den Innenraumbereich von Kraftfahrzeugen, wie beispielsweise für Blenden für Luftausströmer, Schalter und Oberflächen des Radios und des Navigationssystems, Lichtdrehschalter etc. eingesetzt werden. Selbstverständlich kann das Verfahren auch zur Herstellung von Verkleidungs- und Dekorteilen in den Bereichen Elektroindustrie und Unterhaltungselektronik eingesetzt werden, beispielsweise für Abdeckungen, Schalterblenden, Fernbedienungen, Bedienpanels für Haushaltsgeräte, Telefone und Handys.

## Patentansprüche

1. Verfahren zur Herstellung eines Kunststoffbauteiles (1), insbesondere eines Verkleidungsteiles und/oder Dekorteiles eines Kraftfahrzeuges, bestehend aus einem Kunststoffkörper (2) und einer mit dem Kunststoffkörper (2) verbundenen und die Sichtfläche (3) des Kunststoffbauteiles (2) bildenden Dekorbeschichtung (4), mit folgenden Verfahrensschritten:
i) Ein aus einer Trägerschicht (41) und einer Dekorschicht (42) bestehender Folienabschnitt (38) wird als Bestandteil einer Folienbahn (19) derart zwischen zwei geöffneten Werkzeughälften (9, 10) eines Spritzgießwerkzeugs (8) angeordnet, dass die Dekorschicht (42) des Folienabschnittes (38) einer eine Negativform der Sichtfläche (3) des Kunststoffbauteiles (1) abbildenden Werkzeugoberfläche (33) abgewandt ist;
ii) eine erhitzte plastifizierte Kunststoffmasse wird unter Druck derart in eine sich beim Schließen der beiden Werkzeughälften (9, 10) zwischen diesen Werkzeughälften (9,10) ausbildende Kavität (22) eingespritzt, dass die plastifizierte Kunststoffmasse den Folienabschnitt (38) unter Kontakt mit der Dekorschicht (42) gegen die die Negativform der Sichtfläche (3) des Kunststoffbauteiles (1) abbildende Werkzeugoberfläche (33) der Kavität (22) drückt, wobei die Trägerschicht (41) des Folienabschnittes (38) nach Abschluss des Einspritzens der Kunststoffmasse bei einer mit der Kunststoffmasse gefüllten Kavität (22) vollflächig an der die Negativform der Sichtfläche (3) des Kunststoffbauteiles (1) abbildenden Werkzeugoberfläche (33) der Kavität (22) anliegt;
iii) beim Abkühlen der eingespritzten Kunststoffmasse bildet sich aus dieser Kunststoffmasse der Kunststoffkörper (2) aus und verbindet sich unter Bildung des Kunststoffbauteiles (1) stoffschlüssig mit der Dekorschicht (42) des Folienabschnittes (38);
iv) beim oder nach dem Öffnen der Werkzeughälften (9, 10) wird die Trägerschicht (41) von der stoffschlüssig mit dem Kunststoffkörper (2) verbundenen und die Sichtfläche (3) des Kunststoffbauteils (1) bildenden Dekorschicht (42) abgezogen,
wobei
- die plastifizierte Kunststoffmasse von einer der Dekorschicht (42) abgewandten Seite durch eine Durchbrechung (40) in dem Folienabschnitt (38) hindurch in die zwischen den beiden Werkzeughälften (9, 10) des Spritzgießwerkzeuges (8) angeordnete Kavität (22) eingespritzt wird und
- die Durchbrechung (40) während einer Schließbewegung der geöffneten Werkzeughälften (9, 10) in die Folienbahn (19) eingebracht wird und
- die Durchbrechung (40) in den Folienabschnitt (38) der Folienbahn (19) eingebracht wird, welcher bei geschlossenen Werkzeughälften (9, 10) in der Kavität (22) angeordnet ist.

2. Verfahren nach Anspruch 1, **dadurch gekennzeichnet, dass** die Durchbrechung (40) durch Stanzen in den Folienabschnitt (38) oder die Folienbahn (19) eingebracht wird, wobei einer Werkzeughälfte (9, 10) eine Schneidmatrize (45) und der anderen Werkzeughälfte (9, 10) ein zumindest teilweise in die Schneidmatrize (45) eintauchender Schneidstempel (44) zugeordnet ist.

3. Verfahren nach zumindest einem der vorangehenden Ansprüche, **dadurch gekennzeichnet, dass** die Durchbrechung (40) durch einen Dorn (49) hergestellt wird.

4. Verfahren nach zumindest einem der vorangehenden Ansprüche, **dadurch gekennzeichnet, dass** der Folienabschnitt (38) oder die Folienbahn (19) während des Einbringens der Durchbrechung (40) durch einen Niederhalter (47) fixiert werden.

## Claims

1. Method for manufacturing a plastic component (1), in particular a trim part and/or decorative part of a motor vehicle, said plastic component (1) being composed of a plastic body (2) and of a decorative coating (4) that is connected to the plastic body (2) and forms the visible face (3) of the plastic component (2), said method comprising the following method steps:
i) a film portion (38) that is composed of a support layer (41) and of a decorative layer (42) is disposed as a component part of a film web (19) between two opened tool halves (9, 10) of an injection moulding tool (8) in such a manner that the decorative layer (42) of the film portion (38) faces away from a tool surface (33) that represents a negative shape of the visible face (3) of the plastic component (1);
ii) a heated plasticized plastic compound is injected under pressure into a cavity (22) that is configured between the tool halves (9, 10) when said two tool halves (9, 10) are closed in such a manner that the plasticized plastic compound urges the film portion (38) under contact with the decorative layer (42) against the tool surface (33) of the cavity (22) that represents the negative shape of the visible face (3) of the plastic component (1), wherein the support layer (41) of the film portion (38), after completion of the injection of the plastic compound, in the case of a cavity (22) that is filled with the plastic compound bears on the full area of the tool surface (33) of the cavity (22) that represents the negative shape of the visible face (3) of the plastic component (1);
iii) the plastic body (2) is configured from the plastic compound in the cooling of said injected plastic compound and, while forming the plastic component (1), said plastic body (2) connects in a materially integral manner to the decorative layer (42) of the film portion (38);
iv) the support layer (41) when the tool halves (9, 10) are opened, or thereafter, is removed from the decorative layer (42) that is connected in a materially integral manner to the plastic body (2) and forms the visible face (3) of the plastic component (1),
wherein
- the plasticized plastic compound from a side that faces away from the decorative layer (42) is injected through a cut-out (40) in the film portion (38) into the cavity (22) that is disposed between the two tool halves (9, 10) of the injection moulding tool (8), and
- the cut-out (40) is incorporated into the film web (19) during a closing movement of the opened tool halves (9, 10), and
- the cut-out (40) is incorporated into the film portion (38) of the film web (19) which, in the case of closed tool halves (9, 10), is disposed in the cavity (22).

2. Method according to Claim 1, **characterized in that** the cut-out (40) is incorporated into the film portion (38) or into the film web (19) by punching, wherein a cutting die (45) is assigned to one tool half (9, 10), and a cutting ram (44) that plunges at least partially into the cutting die (45) is assigned to the other tool half (9, 10).

3. Method according to at least one of the preceding claims, **characterized in that** the cut-out (40) is produced by a mandrel (49).

4. Method according to at least one of the preceding claims, **characterized in that** the film portion (38) or the film web (19) is fixed by a downholder (47) while the cut-out (40) is being incorporated.

## Revendications

1. Procédé de fabrication d'un composant (1) en matière synthétique, en particulier d'une pièce d'habillage et/ou d'une pièce de décoration d'un véhicule automobile, constitué d'un corps (2) en matière synthétique et d'un revêtement décoratif (4) relié au corps (2) en matière synthétique et formant la surface visible (3) du composant (2) en matière synthétique, le procédé présentant les étapes suivantes :
i) un morceau de feuille (38) constitué d'une couche de support (41) et d'une couche décorative (42) est disposé en tant que composant d'une bande (19) de feuille entre deux moitiés ouvertes (9, 10) d'un outil (8) de moulage par injection de telle sorte que la couche décorative (42) du morceau de feuille (38) soit tournée dans la direction opposée à la surface (33) de l'outil qui forme la forme négative de la surface visible (3) du composant (1) en matière synthétique ;
ii) une pâte de matière synthétique chauffée et plastifiée est injectée sous pression dans une cavité (22) formée lors de la fermeture des deux moitiés (9, 10) d'outil entre ces moitiés (9, 10) d'outil, de telle sorte que la pâte de matière synthétique plastifiée pousse le morceau de feuille (38) contre la surface (33) de l'outil de la cavité (22) qui forme la forme négative de la surface visible (3) du composant (1) en matière synthétique, en contact avec la couche décorative (42), la couche de support (41) du morceau de feuille (38) reposant avec toute sa surface sur la surface (33) de l'outil de la cavité (22) qui forme la forme négative de la surface visible (3) du composant (1) en matière synthétique lorsque l'injection de la pâte de matière synthétique est terminée et lorsque la cavité (22) est remplie avec la pâte de matière synthétique.
iii) le corps (2) en matière synthétique se forme à partir de la pâte de matière synthétique lors du refroidissement de cette pâte de matière synthétique qui a été injectée et se lie par correspondance de matière avec la couche décorative (42) du morceau de feuille (38) en formant le composant (1) en matière synthétique,
iv) lors de l'ouverture ou après l'ouverture des moitiés (9, 10) d'outil, la couche de support (41) est détachée de la couche décorative (42) reliée en correspondance de matière au corps (2) en matière synthétique et formant la surface visible (3) du composant (1) en matière synthétique,
- la pâte de matière synthétique plastifiée étant injectée dans la cavité (22) disposée entre les deux moitiés (9, 10) de l'outil (8) de moulage par injection par un côté opposé à la couche décorative (42) à travers une perforation (40) ménagée dans le morceau de feuille (38) et
- la perforation (40) étant ménagée dans la bande (19) de feuille pendant un déplacement de fermeture des moitiés d'outil (9, 10) ouvertes et
- la perforation (40) étant ménagée dans le morceau de feuille (38) de la bande (19) de feuille qui est situé dans la cavité (22) lorsque les moitiés d'outil (9, 10) sont fermées.

2. Procédé selon la revendication 1, **caractérisé en ce que** la perforation (40) est ménagée par estampage du morceau de feuille (38) ou de la bande (19) de feuille, une matrice de coupe (45) étant associée à une moitié d'outil (9, 10) et un poinçon de découpe (44) qui s'enfonce au moins en partie dans la matrice de coupe (45) étant associé à l'autre moitié d'outil (9, 10).

3. Procédé selon au moins l'une des revendications précédentes, **caractérisé en ce que** la perforation (40) est formée par un mandrin (49).

4. Procédé selon au moins l'une des revendications précédentes, **caractérisé en ce que** le morceau de feuille (38) ou la bande (19) de feuille sont fixés par un dispositif de retenue (47) pendant la formation de la perforation (40).
